# EUROPEAN PATENT APPLICATION

(11) **EP 0 816 452 A2**
(43) Date of publication of application: **07.01.1998**
(21) Application number: 97304688.1
(22) Date of filing: 27.06.1997
(51) Int. Cl.: C09D 143/04, C09D 183/08

(54) **A method for making water and oil repellent coating compositions**

(30) Priority: 28.06.1996 JP 188885/96
(71) Applicant: Dow Corning Toray Silicone Company Ltd., Ichihara-shi, Chiba Prefecture (JP)
(72) Inventor: Kobayashi, Hideki, Dow Corning Toray Silicone Co., Ichihara-shi, Chiba Prefecture (JP); Masatomi, Toru, Dow Corning Toray Silicone Co., Ichihara-shi, Chiba Prefecture (JP)
(74) Representative: Lewin, John Harvey

(57) **Abstract**

This invention relates to a coating composition comprising (A) 100 weight parts silyl-containing vinyl resin that contains in each molecule at least 1 silyl group and (B) 0.01 to 100 weight parts organosilane or organopolysiloxane that contains in each molecule at least 1 perfluoroalkyl group. These coating compositions are highly water and oil-repellent on the surfaces of many substrates.

## Description

This invention relates to coating compositions that are capable of forming a highly water-repellent and highly oil-repellent film on the surfaces of a variety of substrates.

Organic resin-based coating compositions that contain an organosilicon compound, such as an organosilane or organopolysiloxane, are known. Examples of these known coating compositions are metal coating compositions comprising an acrylic resin and the hydrolysis and condensation product of an organotrialkoxysilane and coating compositions comprising a silyl-containing acrylic resin, an acrylic resin, and methyltrimethoxysilane which are disclosed in Japanese Patent Publication No. 6-68096 (1994) and Japanese Patent Application Laid Open No. 3-115479 (1991). A drawback to these compositions, however, is that their films have an unsatisfactory water repellency and oil repellency.

It is also known that plastic moldings with excellent water and oil repellencies can be obtained by first forming a protective layer comprising the hydrolysis and condensation product of an organotrialkoxysilane on the surface of a plastic molding and then contacting and reacting a gaseous perfluoroalkyl-functional organosilane with this protective layer which is disclosed in Japanese Patent Publication No. 7-45586 (1995). This method, however, is operationally complex because it employs a 2-step surface-treatment process. As a consequence, a coating agent is desired that can develop good water and oil repellencies simply through a coating operation.

This invention relates to a coating composition comprising (A) 100 weight parts of a silyl-containing vinyl resin that contains in each molecule at least 1 silyl group and (B) 0.01 to 100 weight parts of an organosilane or organopolysiloxane that contains in each molecule at least 1 perfluoroalkyl group.

It is an object of this invention to provide a coating composition that can form a highly water-repellent and highly oil-repellent coating on the surfaces of a variety of substrates.

The present invention relates to a coating composition comprising
(A) 100 weight parts of a silyl-containing vinyl resin containing in each molecule at least 1 silyl group having the formula -SiZₐR¹ ₍₃₋ₐ₎ wherein R¹ is selected from the group consisting of hydrogen and a monovalent hydrocarbon group, Z is a hydrolyzable group, and a is an integer with a value from 1 to 3 and (B) 0.01 to 100 weight parts of an organosilane or organopolysiloxane containing in each molecule at least 1 perfluoroalkyl group bonded to silicon where the perfluoroalkyl group is a group having the formula -R²-(CF₂)_{b}F wherein R² is selected from the group consisting of an alkylene group and an alkyleneoxyalkylene group and b is an integer with a value of at least 4.

In Component (A), R¹ in the formula is a hydrogen atom or a monovalent hydrocarbon group. The monovalent hydrocarbon group is exemplified by alkyl groups such as methyl, ethyl, or propyl. Z denotes a hydrolyzable group, for example, alkoxy, acyloxy, aminoxy, phenoxy, thioalkoxy, or amino. The subscript a is an integer with a value from 1 to 3. The silyl group can be bonded in a terminal or nonterminal position in the vinyl resin comprising this component. Preferably the silyl-containing vinyl resin of component (A) is a silyl-containing acrylic resin.

The silyl-containing vinyl resin making up this component can be prepared, for example, by copolymerizing an acryloxy-functional alkoxysilane with α,β-ethylenically unsaturated monomer. The acryloxy-functional alkoxysilane is exemplified by the formula

CH₂=CHR⁶-COO-R⁵-SiZₐR¹ ₍₃₋ₐ₎

wherein Z, R¹, and a are defined as above, R⁵ is a divalent hydrocarbon group, and R⁶ is a hydrogen atom or monovalent hydrocarbon group. These alkoxysilanes are exemplified by γ-methacryloxypropyltrimethoxysilane,
γ-acryloxypropyltrimethoxysilane, γ-methacryloxypropyltriethoxysilane, and
γ-methacryloxypropytriisopropoxysilane. The acryloxy-functional alkoxysilane may be a single acryloxy-functional alkoxysilane or a mixture of 2 or more acryloxy-functional alkoxysilanes.

The α,β-ethylenically unsaturated monomer is exemplified by radically polymerizable acrylate monomers, vinyl compounds such as styrene, α-methylstyrene, vinyl chloride, and vinyl acetate, and conjugated diene compounds such as butadiene, isoprene, and chloroprene with radically polymerizable acrylate monomers being preferred. The radically polymerizable acrylate monomers are exemplified by monoacrylate monomers such as acrylic acid, methacrylic acid, methyl acrylate, ethyl acrylate, tert-butyl acrylate, 2-hydroxyethyl acrylate, 2-hydroxypropyl acrylate, methyl methacrylate, ethyl methacrylate, n-butyl methacrylate, tert-butyl methacrylate, isobutyl methacrylate, glycidyl methacrylate, 2-hydroxyethyl methacrylate, 2-hydroxypropyl methacrylate, dimethylaminoethyl methacrylate, methoxydiethylene glycol acrylate, methoxydiethylene glycol methacrylate, methoxytetraethylene glycol methacrylate, and allyl methacrylate; diacrylate monomers such as ethylene glycol dimethacrylate, diethylene glycol dimethacrylate, 1,3-butylene glycol diacrylate, and 1,3-butylene glycol dimethacrylate, triacrylate monomers such as trimethylolpropane trimethacrylate, trimethylolethane trimethacrylate, and tetramethylolmethane triacrylate, and tetraacrylate monomers such as tetramethylolmethane tetraacrylate. The α,β-ethylenically unsaturated monomer may be a single α,β-ethylenically unsaturated monomer or a mixture of 2 or more α,β-ethylenically unsaturated monomers.

This copolymerization of acryloxy-functional alkoxysilane and radically polymerizable acrylate monomer is preferably run by mixing the compounds in a solvent and then reacting them using a radical polymerization initiator. The alkoxysilane to acrylate monomer copolymerization ratio is preferably in the range from 1:100 to 100:1. Suitable radical polymerization initiators are exemplified by organoperoxides such as benzoyl peroxide, dichlorobenzoyl peroxide, di-tert-butyl peroxide, 2,5-di(peroxybenzoate)hex-3-yne, 1,3-bis(tert-butylperoxyisopropyl)benzene, and tert-butyl perbenzoate, and by azo compounds such as azobisisobutyronitrile and dimethylazobutyrate. The weight-average molecular weight of the silyl-containing acrylic resin prepared in this manner will generally be in the range from 1,000 to 500,000 and is preferably in the range from 5,000 to 100,000.

The alkylene group of component (B) is exemplified by ethylene, methylethylene, ethylethylene, propylethylene, butylethylene, propylene, butylene, 1-methylpropylene, pentyiene, hexylene, heptylene, octylene, nonylene, and decylene. The alkyleneoxyalkylene group of component (B) is exemplified by ethyleneoxyethylene, ethyleneoxypropylene, ethyleneoxybutylene, propyleneoxyethylene, propyleneoxypropylene, propyleneoxybutylene, butyleneoxyethylene, and butyleneoxypropylene. The subscript b is an integer with a value of at least 4 and is preferably an integer from 4 to 12, for example, 4, 6, or 8. Preferred for the silicon-bonded groups in this component other than perfluoroalkyl are hydrolyzable groups such as alkoxy and hydroxyl and monovalent hydrocarbon groups including alkyl groups such as methyl, ethyl, propyl, butyl, pentyl, or hexyl, and aryl groups such as phenyl, tolyl, or xylyl. The organosilane and organopolysiloxane constituting this component should not contain the oxyalkylene group.

Component (B) is exemplified by perfluoroalkyl-functional alkoxysilanes having the general formula

F(CF₂)_{b}-R²-SiR³ _{c}X_{(3-c)}

and by perfluoroalkyl-functional organopolysiloxanes having the average unit formula

(F(CF₂)_{b}-R²-R³ _{c}SiO_{(3-c)/2})₁(R⁴ _{d}SiO_{(4-d)/2})ₘ(YO_{1/2})ₙ

wherein R² and b in these formulas are defined as above, and R³ and R⁴ are each selected from the group consisting of alkyl groups and aryl groups. The alkyl groups are exemplified by methyl, ethyl, propyl, butyl, pentyl, hexyl, heptyl, octyl, nonyl, decyl, hexadecyl, or octadecyl and the aryl groups are exemplified by phenyl, tolyl, or xylyl. X denotes a C₁₋₈ alkoxy group, and Y is selected from a hydrogen atom or a C₁₋₈ alkyl. The subscript c is an integer with a value from 0 to 2, d is an integer with a value from 0 to 3, 1 is a number greater than zero, and m and n are each numbers with values of 0 or greater. The ratio of m/l is preferably from 0 to 200.

The perfluoroalkyl-functional alkoxysilane is preferably selected from the group consisting of
C₄F₉C₂H₄Si(OCH₃)₃, C₆F₁₃C₂H ₄Si(OCH₃)₃,
C₈F₁₇C₂H₄Si(OCH₃)₃, C₄F₉C₂H₄Si(OC₂H₅)₃, C₆F₁₃C₂H₄Si(OC₃H₇)₃,
C₈F₁₇C₂H₄Si(OC₃H₇)₃, C₄F₉C₂H₄Si(CH₃)(OCH₃)₂, C₆F₁₃C₂H₄Si(C₃H₇ )(OCH₃)₂,
C₈F₁₇C₂H₄Si(CH₃)(OCH3)₂, C₈F₁₇C₂H₄Si(C₆H₅)(OCH₃)₂, C₆F₁₃C₃H₆ Si(OCH₃)₃,
C₄F₉CH₂OC₂H₄Si(OCH₃)₃, C₆F₁₃CH₂OC₃H₆Si(OCH₃)₃, C₈F₁₇C₂H₄OC₂H₄ Si(OCH₃)₃,
C₄F₉CH₂OC₂H₄Si(CH₃)(OCH₃)₂, C₆F₁₃CH₂OC₂H₄Si(CH₃)(OCH₃)₂,
C₈F₁₇CH₂OC₂H₄Si(CH₃)(OCH₃)₂, C₄F₉C₂H₄Si(CH₃)₂(OCH₃),
C₆F₁₃C₂H₄Si(C₃H₇)(CH₃)(OCH₃), C₈F₁₇C₂H₄Si(CH₃)(C₆H₅)(OCH₃), and
C₆F₁₃C₃H₆Si(CH₃)(OCH₃)₂.

The molecular structure of the perfluoroalkyl-functional organopolysiloxane is exemplified by straight-chain, branched chain-containing straight-chain, network, and three-dimensional molecular structures. Each molecule of this organopolysiloxane preferably contains at least 1 siloxane unit with the formula F(CF ₂)_{b}-R²-SiO_{3/2} in which R² and b are defined as above. This organopolysiloxane preferably has a softening point of at least 30°C and preferably from 50°C to 250°C. When the molecular structure is straight chain, at least 10 mol% of R⁴ is preferably aryl, such as phenyl, in order to obtain a softening point of at least 30°C. The perfluoroalkyl-functional organopolysiloxane is preferably selected from the group consisting of
(F(CF₂)₄C₂H₄SiO _{3/2})_{0.1}((CH₃)₃SiO_{1/2})_{0.9}(SiO_{4/2})_{1.0},
(F(CF₂)₄C₂H₄SiO_{3/2})_{0.1}((CH₃)₃SiO_{1/2})_{0.9}(SiO_{4/2})_{1.0}(CH₃O_{1/2})_{0.2},
(F(CF₂)₄C₂H₄SiO_{3/2})_{12.2}((CH₃)₂SiO_{2/2})_{1.8},
(F(CF₂)₄C₂H₄SiO_{3/2})_{5.5}((CH₃)SiO_{3/2})_{0.7}(CH₃O_{1/2})_{0.2},
(F(CF₂)₄C₂H₄SiO_{3/2})_{4.34}(SiO_{4/2})_{0.35}(CH₃O_{1/2})_{0.2},
(F(CF₂)₄C₂H₄SiO_{3/2}),
(F(CF₂)₄C₂H₄OC₂R₄SiO_{3/2})_{2.0}((CH₃)SiO_{3/2})_{0.5},
(F(CF₂)₈C₂H₄(CH₃)SiO)₁((C₆H₅)₂SiO)₁₀(C₂H₅O_{1/2})_{0.2},
(F(CF₂)₈C₂H₄SiO_{3/2})₁((CH₃)₂SiO)₁₈((C₆H₅)SiO_{3/2})₂,
(F(CF₂)₄C₂H₄SiO_{3/2})₁((C₆H₅)SiO_{3/2})₉(C₂H₅O_{1/2})_{0.2},
(F(CF₂)₄C₂H₄SiO_{3/2})₁((CH₃)₃SiO_{1/2})_{1.2}(SiO_{4/2})₁((C₆H₅)SiO_{3/2})₉,
(F(CF₂)₄C₂H₄SiO_{3/2})₁((CH₃)₃SiO_{1/2})_{1.2}(SiO_{4/2})₁,
(F(CF₂)₄C₂H₄SiO_{3/2})₁((C₆H₅)₂SiO)₉,
(F(CF₂)₈C₂H₄(CH₃)SiO)₁((C₆H₅)₂SiO)₈((C6H₅)SiO_{3/2})₁,
(F(CF₂)₈C₂H₄SiO_{3/2})₁((CH₃)₃SiO_{1/2})_{0.7}(SiO_{4/2})₁((C₆H₅)₂SiO)₁₀,
(F(CF₂)₈C₂H₄(CH₃)SiO)₁((CH₃)₃SiO_{1/2})_{0.7}(SiO_{4/2})₁((C₆H₅)₂SiO)₈,
(F(CF₂)₈C₂H₄SiO_{3/2})₁((C₆H₅)SiO_{3/2})₁₀,
(F(CF₂)₈C₂H₄SiO_{3/2})₁((C₆H₅)₂SiO_{2/2})₁₀, and
(F(CF₂)₈C₂H₄SiO_{3/2})₁((C₆H₅)₂SiO)₅((C₆H₅)SiO_{3/2})₅.

The perfluoroalkyl-functional organopolysiloxanes of this invention can be prepared, for example, by hydrolysis of a perfluoroalkyl-functional organosilane having the general formula F(CF²)_{b}-R²-R³ _{c}SiW_{(3-c)} wherein R², R³, b, and c are defined as above and W is a halogen atom such as chlorine or bromine or an alkoxy group such as methoxy, ethoxy, propoxy, or butoxy, followed by the condensation thereof. The perfluoroalkyl-functional organopolysiloxane can also be prepared by cohydrolysis of the above perfluoroalkyl-functional organosilane and an organosilane having the general formula R⁴ _{d}SiW_{(4-d)} wherein R⁴, W, and d are defined as above in the presence of organic solvent and an acidic aqueous solution, followed by the condensation thereof.

The procedure for this cohydrolysis is exemplified by (i) dissolution of a mixture of the above-described silanes in organic solvent followed by the dropwise addition of this solution to an acidic aqueous solution while stirring and (ii) dropwise addition of an acidic aqueous solution into the stirred organic solvent solution of the silanes. Organic solvents useable for this purpose will preferably dissolve both the silane(s) and the perfluoroalkyl-functional organopolysiloxane product and are exemplified by ether solvents such as diethyl ether or tetrahydrofuran, ketone solvents such as acetone or methyl isobutyl ketone, aromatic hydrocarbon solvents such as benzene, toluene, or xylene, aliphatic hydrocarbon solvents such as hexane, heptane, or isooctane, alicyclic hydrocarbon solvents such as cyclohexane, fluorinated solvents such as a,a,a-trifluorotoluene or hexafluoroxylene, and volatile silicone solvents such as hexamethyldisiloxane, hexamethylcyclotrisiloxane, or octamethylcyclotetrasiloxane.

The silane concentration in the organic solvent is generally preferably in a range that yields a concentration of 10 to 80 weight% for the perfluoroalkyl-functional organopolysiloxane product. An aqueous solution of an acid such as sulfuric acid, nitric acid, or hydrochloric acid is used as the acidic aqueous solution. Among these, aqueous solutions of hydrochloric acid are preferred, in which case the hydrogen chloride concentration must be at least 5 wt%. The temperature during and after addition is preferably in the range from 0 to 120°C. The resulting solution of perfluoroalkyl-functional organopolysiloxane, after an optional addition of organic solvent or water, is then held at quiescence in order to separate the aqueous layer. After separation of the aqueous layer, the organic solvent layer containing the perfluoroalkyl-functional organopolysiloxane is preferably washed with water to neutrality and then dried. This drying can be effected at the azeotrope of the organic solvent using a water-separation tube. The organic solvent used for this purpose preferably has a low solubility for water. The resulting perfluoroalkyl-functional organopolysiloxane will usually contain some amount of residual silanol and possibly alkoxy, and the content thereof will generally be from 0.01 to 10 wt% and preferably is from 0.05 to 5 wt%.

Component (B) is added at from 0.01 to 100 weight parts and preferably at from 0.02 to 80 weight parts, in each case per 100 weight parts component (A). The effect on the water repellency of the coating will be inadequate at below 0.01 weight part, while exceeding 100 weight parts causes a decline in the physical properties of the coating.

The composition according to the present invention comprises the above-described components (A) and (B), but the composition is preferably used on various substrates after dilution of these components with organic solvent or water. Diluents that dissolve the silyl-containing vinyl resin (A) are preferred, but diluents that simply disperse and suspend this component can also be used. Useable organic solvents are exemplified by aromatic hydrocarbon solvents such as benzene, toluene, or xylene, aliphatic hydrocarbon solvents such as pentane, hexane, or heptane, alicyclic hydrocarbon solvents such as cyclohexane, cycloheptane, or cyclooctane, halohydrocarbon solvents such as chlorobenzene, perchloroethylene, trifluoromethylbenzene, 1,3-bis(trifluoromethyl)benzene, or methylpentafluorobenzene, ester solvents such as ethyl acetate or butyl acetate, ketone solvents such as acetone, methyl ethyl ketone, or methyl isobutyl ketone, ether solvents such as dimethyl ether, diethyl ether, or tetrahydrofuran, and alcohol solvents such as methanol, ethanol, or isopropyl alcohol. The organic solvent can be a single organic solvent or a combination of 2 or more organic solvents. Diluent addition is determined by the desired workability, but the diluent will ordinarily be used at from I to 10,000 weight parts and preferably at from 10 to 1,000 weight parts, in each case per 100 weight parts component (A).

In addition, the composition according to the present invention can contain a silane coupling agent in order to increase its adherence to various substrates and can also contain a curing agent in order to improve its curability. The silane coupling agents are preferably selected from the group consisting of H₂NCH₂ CH₂Si(OC₂H₅)₃, NH₂CH₂CH₂NH(CH₂)₃Si(OCH₃)₃,

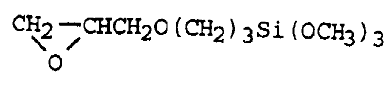

CH₂=CHSi(OCH₃)₃, CH₂=CHSi(OC₂H₅)₃,

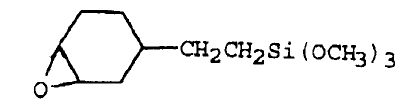

CH₂=CHSi(OOCCH₃)₃,

HS(CH₂)₃Si(OCH₃)₃,

and 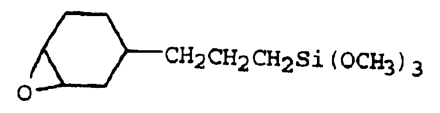 A single silane coupling agent or a combination of 2 or more silane coupling agents can be used. The silane coupling agent is preferably added in the range from 0.01 to 10 wt% based on the total weight of the composition.

The curing agents used in dehydration condensation reactions are effective as the curing agent under consideration and are specifically exemplified by the tin salts of carboxylic acids such as dibutyltin acetate, dibutyltin laurate, dibutyltin dioctoate, stannous octoate, stannous naphthenate, stannous oleate, stannous isobutyrate, stannous linoleate, stannous stearate, stannous benzoate, stannous naphthoate, stannous laurate, stannous o-thymotate, stannous β-benzoylpropionate, stannous crotonate, stannous tropate, stannous p-bromobenzoate, stannous palmitoleate, stannous cinnamate, or stannous phenylacetate, the iron salts, manganese salts, and cobalt salts of the preceding carboxylic acids, tetraalkyl titanates, complex salts of dialkyl titanates, organosiloxytitanates, zirconium alkoxides such as zirconium tetraethoxide and zirconium tetra-n-butoxide, and various other zirconium catalysts.

In addition to the preceding, colorants, pigments, dyes, light absorbers, fluorescent paints, photosensitizers, color formers, and fillers such as microparticulate silica can be added to the compositions of this invention on an optional basis.

The composition according to this invention can be prepared by mixing the above-described components (A) and (B) to homogeneity. In this process, components (A) and (B) can each be diluted with organic solvent or water prior to their mixing.

When the organosilane or organopolysiloxane (B) in the compositions of this invention contain alkoxy or hydroxyl groups, these groups and the hydrolyzable group Z in component (A) can in part undergo a condensation reaction to give siloxane bonds. This partial condensation reaction is started and run by mixing components (A) and (B) with the addition of a small amount of water at room temperature or with heating and optionally in the presence of organic solvent as described above. A condensation reaction-accelerating catalyst may be added to this procedure. Moreover, in the case of addition of a silane coupling agent to the compositions of this invention, the silane coupling agent can become inserted into the siloxane bonds between components (A) and (B).

The substrate surface can be treated with the compositions of this invention by, for example, application using a brush, bar coater, or spin coater, atomizing the composition and spraying it with a sprayer, or dipping the substrate in the composition. After the compositions of this invention have been uniformly coated on the substrate surface, a film or coating can be formed by removal of the organic solvent or water at ambient temperature or with heating. Film formation is preferably carried out by heating for 20 seconds to 3 hours at 50°C to 150°C.

The composition according to the present invention can be applied to substrates such as glass sheet or plate made of soda glass, heat-reflecting glass, automotive glass, glass for marine applications, glass for aerospace applications, metal sheet or plate made of copper, iron, stainless steel, aluminum, zinc, paper such as high-quality paper and low-grade writing paper, synthetic resins such as polyester resins, polycarbonate resins, polystyrenes, acrylic resins, methacrylic resins, nylon resins, and films thereof, fibers such as natural and synthetic fibers, ceramics, and plastics. The surface of the substrate is preferably cleaned with organic solvent or cleanser prior to coating with the composition.

The compositions of this invention as described above can form a highly water-repellent and highly oil-repellent coating with a low surface tension on a variety of substrate surfaces. This coating also exhibits the advantages of excellent antistaining performance, excellent release performance, excellent heat resistance, excellent aging resistance, and excellent resistance to chemicals. As a result, the compositions of this invention can be used in applications that require such properties and in particular is well qualified as a coating that prevents the adhesion of water drops, snow, ice, oils and greases, thermoplastic powders, and resin micropowders, as a stain-resistant coating, and as a peelable or release coating.

The invention will be explained in greater detail below through working examples. The viscosity values reported in the examples were measured at 25°C and were measured in mPa·s (millipascal-seconds), 1 mPa·s = 1 centipoise. The water repellency of the coatings was evaluated by measurement of the contact angle with water. The oil repellency was evaluated by measuring the contact angle with methylene iodide and hexadecane. These contact angles were measured as follows: using a microsyringe containing water, methylene iodide, or hexadecane which was in each case dripped at 20°C onto the coating at 5 locations; the corresponding contact angles were measured using a contact angle meter from Kyowa Kaimen Kagaku Kabushiki Kaisha; and these values were averaged to give the contact angles for the coating. The coating hardness was measured by the pencil scratch test (Japanese Industrial Standard(JIS) K 5400).

### Example 1

1 gram (g) of azobisisobutyronitrile, 70 (g) of xylene, and 60 (g) of n-butyl alcohol were placed in a flask and heated to 95°C with stirring. To this was then added dropwise a liquid mixture of 70 (g) of methyl methacrylate monomer and 30 g of a methacryloxypropyl-functional trimethoxysilane having the average formula CH₂=CCH₃CO₂(CH₂)₃Si(OCH₃)₃ followed by stirring for 1 hour. After the completion of stirring, the reaction was stopped by cooling to yield a xylene/n-butyl alcohol solution of reaction product. This solution was colorless and transparent, had a viscosity of 100 mPa·s, and contained 40 weight% nonvolatiles. Analysis of the reaction product by Fourier-transform infrared absorption analysis and ¹³C-nuclear magnetic resonance analysis identified it as a silyl-containing acrylic resin having the formula 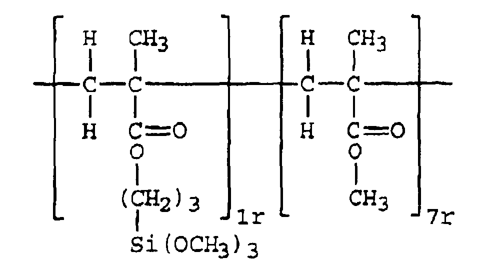 wherein r is an integer with a value ≥ 1.

The number-average molecular weight of this silyl-containing acrylic resin was 12,000 and its weight-average molecular weight was 22,000 (polystyrene calibration).

### Example 2

A liquid mixture of 24 (g) water, 18 (g) isopropyl alcohol, and 70 (g) of 1,3-bis(trifluoromethyl)benzene was placed in a flask. To this was then added dropwise with stirring a liquid mixture of 23 (g) of heptadecafluorodecyltrichlorosilane C₈F₁₇C₂H₄SiCl₃, 101 (g) of diphenyldichlorosilane, 70 (g) of 1,3-bis(trifluoromethyl)benzene, and 50 (g) of toluene. The completion of addition was followed by stirring for 2 hours. The reaction mass was then held at quiescence and the aqueous layer was separated. The organic solvent layer recovered thereby was repeatedly washed with pure water, 10 wt% aqueous sodium bicarbonate solution, and then pure water in this order. After this the organic solvent was removed by heating to give 87 (g) of a fluorosilicone resin having the average unit formula

(C₈F₁₇C₂H₄SiO_{3/2})ₚ((C₆H₅)₂SiO)_{q}

in which p was 1 on average and q was 10 on average. This fluorosilicone resin was a white solid with a softening point of 70°C.

### Example 3

A coating composition was prepared by homogeneously mixing 4.0 (g) of the fluorosilicone resin prepared in Example 2 into 100 g of the xylene/n-butyl alcohol solution of silyl-containing acrylic resin prepared in Example 1 (silyl-containing acrylic resin content = 40 wt%). A smooth, flat, and cleaned glass plate was dipped in this coating composition for 10 minutes, withdrawn after the 10 minutes, air-dried at room temperature for 1 hour, and then heated at 150°C for 1 hour to form a coating on the glass plate. The contact angle and hardness of this coating were measured, and the results are reported in Table 1.

### Example 4

A coating composition was prepared as in Example 3, but in this case using an 8.0 g addition of the fluorosilicone resin from Example 2 that was used in Example 3. The resulting coating composition was applied as in Example 3 to form a coating on glass plate. The contact angle and hardness of this coating were measured, and the results are reported in Table 1.

### Example 5

A coating composition was prepared by homogeneously mixing 4.0 (g) of a perfluoroalkyl-functional trimethoxysilane having the formula C₈F₁₇C₂H₄Si(OCH₃)₃ and 100 g 1,3-bis(trifluoromethyl)benzene into 100 g of the xylene/n-butyl alcohol solution of silyl-containing acrylic resin prepared in Example 1 (silyl-containing acrylic resin content = 40 wt%). A smooth, flat, and cleaned glass plate was dipped in this coating composition for 10 minutes, withdrawn after the 10 minutes, air-dried at room temperature for 1 hour, and then heated at 150°C for 1 hour to form a coating on the glass plate. The contact angle and hardness of this coating were measured, and the results are reported in Table 1.

### Comparative Example 1

A coating composition was prepared as in Example 3, but in this case without using the fluorosilicone resin from Example 2 that was used in Example 3. The resulting coating composition was applied as in Example 3 to form a coating on glass plate. The contact angle and hardness of this coating were measured, and the results are reported in Table 1.

### Comparative Example 2

A coating composition was prepared as in Example 5, but in this case using a 3,3,3-trifluoropropyl-functional trimethoxysilane having the formula CF₃C₂H₄Si(OCH₃)₃ in place of the perfluoroalkyl-functional trimethoxysilane that was used in Example 5. The resulting coating composition was applied as in Example 5 to form a coating on glass plate. The contact angle and hardness of this coating were measured, and the results are reported in Table 1.

**Table 1**

| | contact angle (°) | | | |
|---|---|---|---|---|
| | water | methylene iodide | hexadecane | pencil hardness |
| Example 1 | 110 | 35 | 53 | 3H |
| Example 2 | 112 | 35 | 53 | 3H |
| Example 3 | 112 | 63 | 59 | 3H |
| Comparative Example 1 | 73 | 29 | 10 | 3H |
| Comparative Example 2 | 83 | 60 | 41 | 3H |

## Claims

1. A method for making a coating composition comprising mixing:
(A) 100 weight parts of silyl-containing vinyl resin containing in each molecule at least 1 silyl group having the formula
-SiZₐR¹ ₍₃₋ₐ₎
wherein R¹ is selected from hydrogen atom or a monovalent hydrocarbon group, Z is a hydrolyzable group, and a is an integer with a value from 1 to 3;
(B) 0.01 to 100 weight parts of an organosilane or organopolysiloxane containing in each molecule at least 1 perfluoroalkyl group bonded to silicon where the perfluoroalkyl group is a group having the formula
-R²-(CF₂)_{b}F
wherein R² is selected from alkylene group or alkyleneoxyalkylene group and "b" is an integer with a value of at least 4;
(C) optionally at least one organic solvent;
(D) optionally water;
(E) optionally at least one silane coupling agent; and
(F) optionally a curing agent.

2. The method of Claim 1, wherein Z is selected from the group consisting of alkoxy, acyloxy, aminoxy, phenoxy, thioalkoxy, and amino.

3. The method of Claim 1, wherein (B) is selected from perfluoroalkyl-functional alkoxysilanes having the general formula
F(CF₂)_{b}-R²-SiR³ _{c}X_{(3-c)}
or perfluoroalkyl-functional organopolysiloxanes having the average unit formula
(F(CF₂)_{b}-R²-R³ _{c}SiO_{(3-c)/2})₁(R⁴ _{d}SiO_{(4-d)/2})ₘ(YO_{1/2})ₙ,
wherein R² is selected from alkylene group or alkyleneoxyalkylene group, "b" is an integer with a value of at least 4, and R³ and R⁴ are each selected from alkyl groups or aryl groups, X denotes a C₁₋₈ alkoxy group, Y is hydrogen atom or a C₁₋₈ alkyl group, "c" is an integer with a value from 0 to 2, "d" is an integer with a value from 0 to 3, 1 is a number greater than zero, and "m" and "n" are each numbers with values of 0 or greater.

4. The method of Claim 1, wherein (A) is a compound having the formula 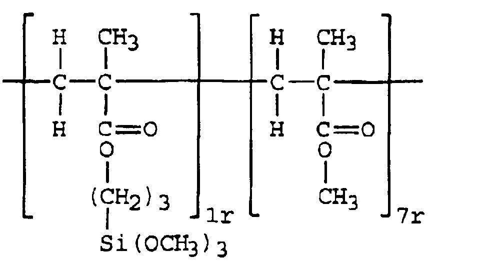 wherein "r" is an integer with a value of at least 1.

5. The method of claim 1, wherein the organic solvent (c) is selected from the group consisting of benzene, toluene, xylene, pentane, hexane, heptane, cyclohexane, cycloheptane, cyclooctane, chlorobenzene, perchloroethylene, trifluoromethylbenzene, 1,3-bis(trifluoromethyl)benzene, methylpentafluorobenzene, ethyl acetate, butyl acetate, acetone, methyl ethyl ketone, methyl isobutyl ketone, dimethyl ether, diethyl ether, tetrahydrofuran, methanol, ethanol, and isopropyl alcohol.

6. The method of claim 1, wherein the silane coupling agent is selected from the group consisting of
H₂NCH₂CH₂Si(OC₂H₅)₃, NH₂CH₂CH₂NH(CH₂)₃Si(OCH₃)₃, 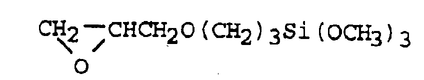
CH₂=CHSi(OCH₃)₃, CH₂=CHSi(OC₂H₅)₃, 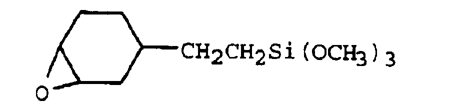
CH₂=CHSi(OOCCH₃)₃,
HS(CH₂)₃Si(OCH₃)₃,
and

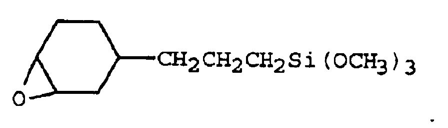

7. The method of claim 1, wherein the curing agent is selected from the group consisting of tin salts of carboxylic acids, iron salts of carboxylic acids, manganese salts of carboxylic acids, cobalt salts of carboxylic acids, tetraalkyl titanates, complex salts of dialkyl titanates, organosiloxytitanates, and zirconium alkoxides.

8. A method of treating a substrate comprising:
(I) applying the coating composition obtainable by the method of claim 1 to a substrate; and (II) heating said composition and substrate after step (I).

9. The method of claim 8, wherein the coating composition further comprises at least one ingredient selected from the group consisting of at least one organic solvent, water, at least one silane coupling agent, and a curing agent.

10. The method of claim 8, wherein the substrate is selected from the group consisting of glass, metal sheet, copper plates, iron, stainless steel, aluminum, zinc, paper, synthetic resins, films of synthetic resins, fibers, ceramics, and plastics.
